# EUROPEAN PATENT APPLICATION

(11) **EP 2 835 977 A1**
(43) Date of publication of application: **11.02.2015**
(21) Application number: 14180059.9
(22) Date of filing: 06.08.2014
(51) Int. Cl.: H04N 21/2343, H04N 21/432, H04N 21/434, H04N 21/443, H04N 21/6377, H04N 21/8352, H04N 21/254, G11B 27/034, G11B 27/10, G11B 20/00

(54) **Image reproducing apparatus, server and image reproducing methods thereof**

(30) Priority: 06.08.2013 KR 20130093230
(71) Applicant: Samsung Electronics Co., Ltd, Gyeonggi-do 443-742 (KR)
(72) Inventor: Kim, Jung-su, Gyeonggi-do (KR); Kang, Se-hee, Seoul (KR); Kang, Hye-rim, Seoul (KR); Eo, Ho-jin, Gyeonggi-do (KR); Jo, Se-eun, Seoul (KR)
(74) Representative: Brandon, Paul Laurence

(57) **Abstract**

An image reproducing apparatus, a server, and image reproducing methods thereof are provided. The image reproducing apparatus includes a reproducer which reads and processes a first video signal and an audio signal for a first image from a multimedia medium; a signal processor which processes additional data received from a server to generate a second video signal for a second image based on the first video signal; and a controller which collects image reproducing apparatus information and multimedia medium information through the reproducer, requests a host authentication and the additional data along with transmitting the collected information to the server, and generates the second video signal by synthesizing the first video signal output from the reproducer and the additional data processed by the signal processor.

## Description

### BACKGROUND

### Field

Apparatuses and methods consistent with exemplary embodiments relate to an image reproducing apparatus, and more particularly to an image reproducing apparatus, a server, and image reproducing methods thereof, which processes a full high-definition (FHD) image with additional data received from a content providing server for enhancing the quality of the corresponding image, converts the corresponding image into an ultra high-definition (UHD) image, and reproduces the converted image.

### Description of the Related Art

An image reproducing apparatus, for example, a Blu-ray disc (BD) player reads data from a multimedia medium such as a Blu-ray disc or the like through a loader and reproduces it.

UHD image refers to image that has higher definition or resolution than that of FHD image. However, contents of the Blu-ray discs have been made with FHD image having a resolution of 1920 X 1080, the BD player cannot reproduce UHD image having a higher resolution of 3840 X 2160 than that of the FHD image.

Because UHD technology is now in an early stage of development, it is hard to find a disc containing UHD contents or a reproducing device supporting UHD contents on the market and it is expected that a substantial amount of time will be taken to widely spread and extend the disc containing the UHD contents and the UHD reproducing device on the market.

Accordingly, there is increasingly needed an apparatus or method for reproducing the UHD image by using the Blu-ray discs containing FHD contents and the BD player capable of reproducing only the FHD image.

### SUMMARY

One or more exemplary embodiments provide an image reproducing apparatus, a server, and image reproducing methods thereof, which processes a full high-definition (FHD) image with additional data received from a content providing server for enhancing the quality of the corresponding image, converts the corresponding image into an ultra high-definition (UHD) image, and reproduces the converted image.

According to an aspect of an exemplary embodiment, there is provided an image reproducing apparatus including: a communicator configured to communicate with a server; a reproducer configured to read and process a first video signal and an audio signal from a multimedia medium in which the first video signal and the audio signal are recorded for a first image; a signal processor configured to process additional data received from the server through the communicator to generate a second video signal for a second image based on the first video signal; and a controller configured to collect information , request a host authentication and the additional data along with transmitting the collected information to the server through the communicator, generate the second video signal by synthesizing the first video signal output from the reproducer and the additional data processed by the signal processor, and output the generated second video signal and the audio signal.

The information may include image reproducing apparatus information and multimedia medium information.

The second image may include an image having a higher resolution than that of the first image.

The additional data may include a differential value between the first image and the second image.

The reproducer may include a first demultiplexer configured to demultiplexe the first video signal and the audio signal, and a first decoder configured to decode the first video signal and the audio signal output from the first demultiplexer.

The reproducer may further include a scaler configured to upscale the decoded first video signal.

The signal processor may include a second demultiplexer configured to demultiplexe the additional data, and a second decoder configured to decode additional data output from the second demultiplexer.

The image producing apparatus may further include a user input section configured to receive a user's input, and the controller may request the additional data of the server in accordance with the user's input.

The controller may operate an executive program, which is received from the server or previously stored in the image reproducing apparatus, to collect the image reproducing apparatus information and the multimedia medium information, and to request the host authentication and the additional data.

The controller may automatically collect the image reproducing apparatus information from a stored operation system when the executive program is operated.

The controller may automatically collect the multimedia medium information if the multimedia medium is loaded.

The controller may collect the image reproducing apparatus information and the multimedia medium information in accordance with a user's input through an execution menu of the executive program.

The image reproducing apparatus information may include at least one of a manufacture's serial or production number and reproducibility of a second image.

The multimedia medium information may include at least one of a multimedia medium identification (ID), a title, and clip information.

According to an aspect of another exemplary embodiment, there is provided an image reproducing method of an image reproducing apparatus including: reading and processing a first video signal and an audio signal from a multimedia medium in which the first video signal and the audio signal are recorded for a first image; collecting information; transmitting the collected information to a server and requesting a host authentication and additional data to generate a second video signal for a second image based on the first video signaler; processing the additional data received from the server; and generating the second video signal by synthesizing the processed first video signal and additional data, and outputting the generated second video signal and the audio signal.

The information may include image reproducing apparatus information and multimedia medium information.

The second image may include an image having a higher resolution than that of the first image.

The additional data may include a differential value between the first image and the second image.

The processing the first video signal and the audio signal may include demultiplexing the first video signal and the audio signal, and decoding the demultiplexed first video signal and audio signal.

The processing the first video signal and the audio signal may further include upscaling the decoded first video signal.

The processing the additional data may include demultiplexing the additional data, and decoding the demultiplexed additional data.

The transmitting the collected information and requesting host authentication and additional data may include receiving a user's input, and requesting the additional data of the server in accordance with the user's input.

The image reproducing method may be performed through an executive program, which is received from the server or previously stored in the image reproducing apparatus.

The collecting information may include automatically collecting the image reproducing apparatus information from a stored operation system when the executive program is operated.

The collecting information may include automatically collecting the multimedia medium information if the multimedia medium is loaded.

The collecting information may include collecting the image reproducing apparatus information and the multimedia medium information in accordance with a user's input through an execution menu of the executive program.

According to an aspect of another exemplary embodiment, there is provided a server including: a communicator configured to communicate with an image reproducing apparatus; a storage section configured to store a first video signal and an audio signal for a first image, and a second video signal and an audio signal for a second image; a first signal processor configured to processe the first video signal for the first image stored in the storage section; a calculator configured to calculate a differential value between the second video signal for the second image stored in the storage section and the first video signal processed by the first signal processor; a second signal processor configured to process the differential value calculated by the calculator; and a controller configured to control the storage section to store the first video signal, the audio signal and the differential value processed by the first and second signal processors in the storage section, perform, when a request of the differential value is received along with image reproducing apparatus information and multimedia medium information from the image reproducing apparatus, a host authentication, determine whether there is a corresponding differential value, and transmit the corresponding differential value to the image reproducing apparatus if the host authentication is passed and it is determined that there is the corresponding differential value.

The second image may include an image having a higher resolution than that of the first image.

The first signal processor may include a scaler configured to upscale the first video signal and the audio signal for the first image.

The second signal processor may include an encoder configured to encode the differential value.

The server may further include a third signal processor configured to process the first video signal and the audio signal for the first image stored in the storage section.

The third signal processor may include an encoder configured to encode the first video signal and the audio signal for the first image, and the controller may control the second and third signal processors to synchronize the first video signal and the audio signal with the differential value when the second and third signal processors perform signal processing.

The image reproducing apparatus information may include at least one of a manufacture's serial or production number and reproducibility of the second image.

The multimedia medium information may include at least one of a multimedia medium identification, a title, and clip information.

According to an aspect of another exemplary embodiment, there is provided a method of controlling a server including: calculating and storing a differential value between a first image and a second image; receiving a request of the differential value along with image reproducing apparatus information and multimedia medium information from an image reproducing apparatus; performing a host authentication and determining whether there is a corresponding differential value, based on the received information; and transmitting the corresponding differential value to the image reproducing apparatus if the host authentication is passed and it is determined that there is the corresponding differential value.

The second image may include an image having a higher resolution than that of the first image.

The calculating and storing the differential value may include storing a first video signal and an audio signal for the first image, and a second video signal and an audio signal for the second image; processing a first video signal for the first image; calculating a differential value between the stored second video signal and the processed first video signal; processing the calculated differential value; and storing the processed first video signal and audio signal and the differential value.

The processing the first video signal for the first image may include upscaling the first video signal.

The processing the differential value may include encoding the differential value.

The method may further include processing the stored first video signal and audio signal for the first image.

The processing the first video signal and audio signal for the first image may include encoding the first video signal and audio signal for the first image, and the processing the first video signal and audio signal for the first image and the processing the differential value may be performed to synchronize the first video signal and the audio signal with the differential value.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram showing an image reproducing apparatus and a content providing server according to an exemplary embodiment;
FIG. 2 is a block diagram showing elements of the image reproducing apparatus according to an exemplary embodiment;
FIG. 3 is a block diagram showing an alternative example of the elements in the image reproducing apparatus of FIG. 2;
FIG. 4 is a flowchart showing image reproducing processes in the image reproducing apparatus according to an exemplary embodiment;
FIG. 5 is a block diagram showing elements of a content providing server according to an exemplary embodiment;
FIG. 6 is a block diagram showing an alternative example of the elements in the content providing server according to an exemplary embodiment; and
FIG. 7 is a flowchart showing operating processes in the content providing server according to an exemplary embodiment.

### DETAILED DESCRIPTION OF EXEMPLARY EMBODIMENTS

Below, exemplary embodiments will be described in greater detail with reference to the accompanying drawings. The exemplary embodiments may be embodied in various forms without being limited to the exemplary embodiments set forth herein.

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the application with unnecessary detail.

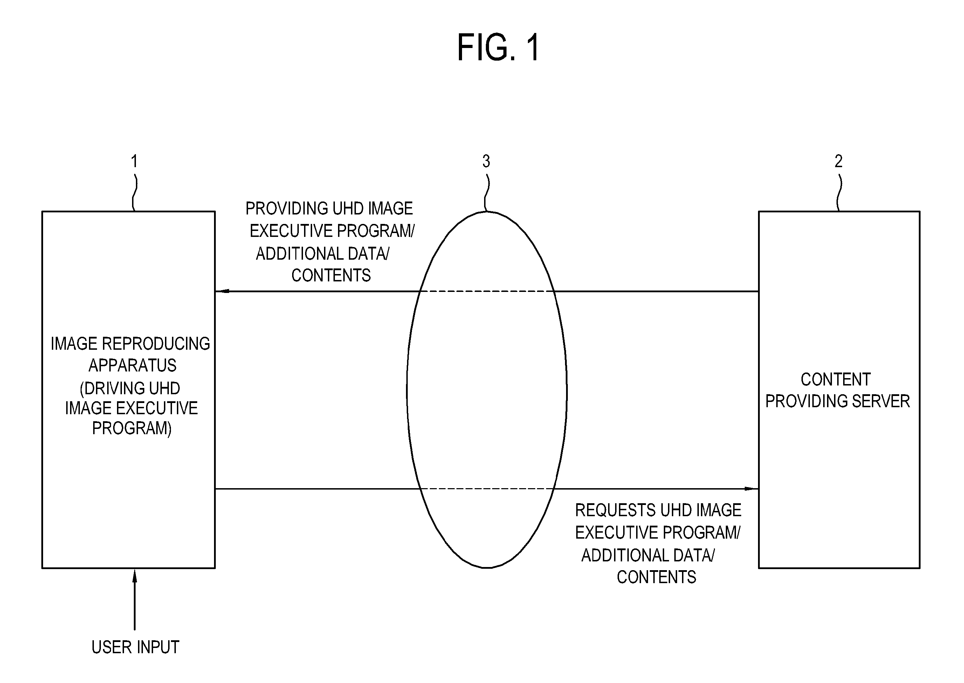

FIG. 1 is a block diagram showing an image reproducing apparatus 1 and a content providing server 2 according to an exemplary embodiment.

As shown therein, the image reproducing apparatus 1 and the content providing server 2 are connected to each other through a network 3.

The image reproducing apparatus 1, which operates in accordance with a user's command, may include a device, such as a Blu-ray disc (BD) player, a home theater and the like, that may reproduce or record a video signal and an audio signal for a full high-definition (FHD) image recorded in a media medium.

A user's command includes information that allows the image reproducing apparatus 1 to determine whether to perform a predetermined operation in accordance with a user's behavior. The user's command may include a remote control signal input through a remote controller, and a key input signal input through a key control unit.

Hereinafter, a BD player will be described as an example of the image reproducing apparatus 1 in this embodiment. Also, a user's input will refer to a user's command for convenience hereinafter.

The network 3 includes a device or infrastructure employed in communication between the image reproducing apparatus 1 and the content providing server 2 for transmitting and receiving information about a user's input and a provided content service, which may be a wired and/or wireless network such as Internet or the like.

The content providing server 2, which may be various servers managed by content providers, includes a server that is connected to the network 3 and provides a predetermined content service to a user who is at a remote place.

The content providing server 2 sends the image reproducing apparatus 1 various programs including an executive program (hereinafter, referred to as a 'UHD image executive program') having a UHD image generating function according to an exemplary embodiment (to be described later) provided by the content providing server 2, and various contents containing additional data according to an exemplary embodiment (to be described later) requested by the image reproducing apparatus 1, through a predetermined authentication process in accordance with requests of the image reproducing apparatus 1 (i.e., a client).

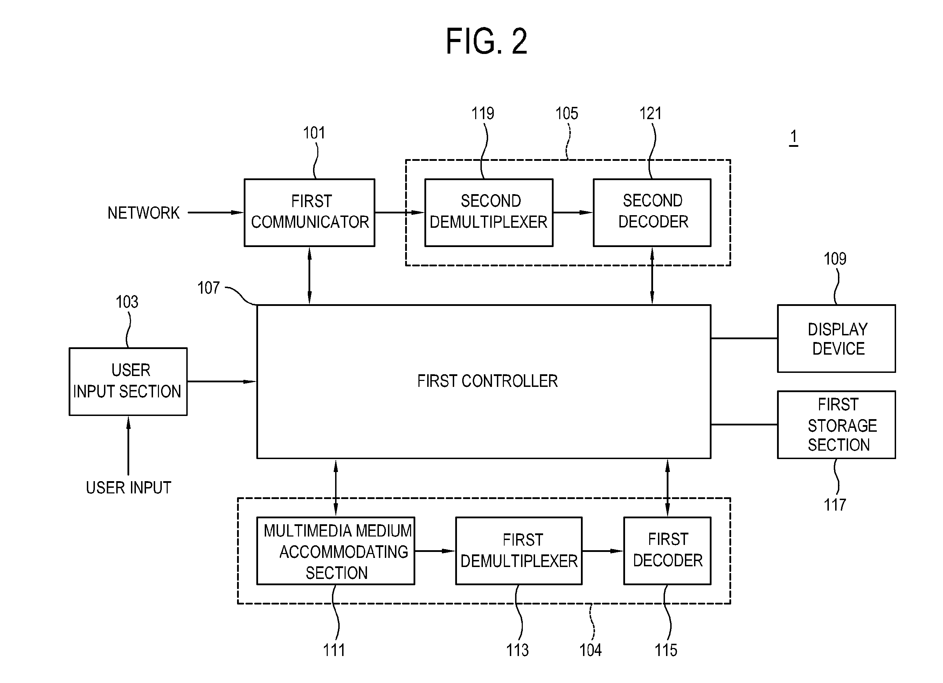

The image reproducing apparatus 1 executes a UHD image executive program or other application executive programs provided from the content providing server 2 or previously stored in a first storage section 117 in accordance with a user's input through a user input section 103 (refer to FIG. 2) such as a remote controller or a key control unit, and uses the additional data and/or other contents provided from the content providing server 2.

FIG. 2 is a block diagram showing elements of the image reproducing apparatus 1 according to an exemplary embodiment.

The image reproducing apparatus 1 includes a first communicator 101, a user input section 103, a reproducer 104, a signal processor 105, a first controller 107 and a first storage section 117.

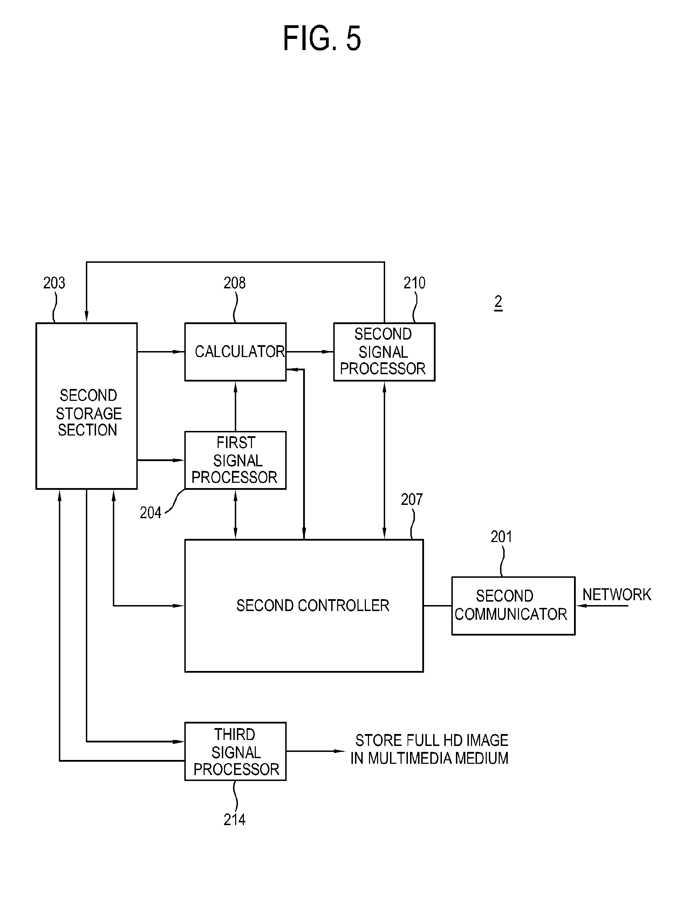

The first communicator 101 communicates with a second communicator 201 (refer to FIG. 5) of the content providing server 2 through the network 3. Alternatively, the first communicator 101 may communicate with the other party communicator 201 through short-range communication method such as Bluetooth or the like. The first communicator 101 performs communication under control of the controller 107, thereby transmitting information to the other party communicator 201 or receiving information from the other party communicator 201. The information received from the other party communicator 201 through the first communicator 101 may include at least one of a video, an audio and data, and undergo a proper process through the signal processor 105 so as to be output to a display device 109 such as a television (TV), or the like.

The user input section 103 for receiving a user's input may be for example realized by the remote controller and the key control unit.

Through the user input section 103, the image reproducing apparatus 1 may be turned on and/or off. To this end, the remote controller and the key control unit may include an input key or a button.

Also, through the user input section 103, operations of a loader (not shown), a pick-up unit (not shown), etc. of a multimedia medium accommodating section 111 may be controlled. To this end, the remote controller and the key control unit may include an open and/or eject key or a button for driving the loader, a play and/or stop key or a button for operating the pick-up unit, etc.

Also, through the user input section 103, a user's input may be selected for executing and operating a firmware or operating system and a UHD image executive program stored in the first storage section 117 (to be described later). To this end, the remote controller may include up, down, left and right move buttons, an okay button, and numeral buttons, etc.

A user's input received in the user input section 103 is transmitted to the first controller 107, and the first controller 107 drives corresponding elements in accordance with the user's input.

The reproducer 104, which is to record and reproduce a first image such as an FHD image, reads a first video signal and an audio signal from a multimedia medium in which the first video signal and the audio signal are recorded for the first image, or records the first video signal and the audio signal in the multimedia medium. To this end, the reproducer 104 may include the multimedia medium accommodating section 111, a first demultiplexer 113, and a first decoder 115.

The multimedia medium accommodating section 111 includes the loader for accommodating, loading and unloading the multimedia medium such as a Blu-ray disc under control of the first controller 107, and the pick-up unit for reading or recording the video signal and audio signal from or in the multimedia medium.

The first demultiplexer 113 demultiplexes the first image into the first video signal and the audio signal.

The first decoder 115 decodes first video and audio signals output from the first demultiplexer 113. Here, the first decoder 115 may be an H.264 decoder using an H.264 method for decoding.

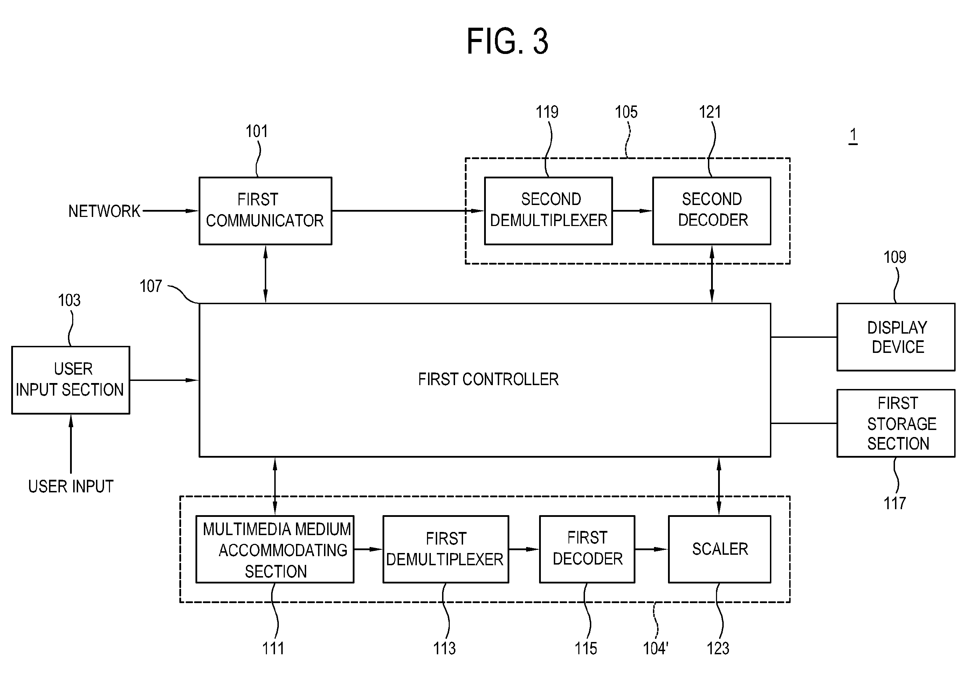

If the first video signal recorded in the multimedia medium is not scaled and stored to have the same resolution as a second video signal for a second image (e.g., a UHD image), as shown in FIG. 3, a reproducer 104' may further include a scaler 123 for upscaling the decoded first video signal. Here, the second image is an image having a higher resolution than that of the first image.

The signal processor 105 processes a signal containing the additional data received from the content providing server 2 through the first communicator 101 according to an exemplary embodiment. Here, the additional data is data to generate the second video signal for the second image based on the first video signal, and is a differential value between the first image and the second image, which is generated in a calculator 208 (refer to FIG. 5) of the content providing server 2 (to be described later).

The signal processor 105 includes a second demultiplexer 119 and a second decoder 121. The second demultiplexer 119 demultiplexes the signal containing the additional data, and the second decoder 121 decodes the additional data output from the second demultiplexer 119. Here, the second decoder 121 may include a high efficiency video coding (HEVC) decoder using HEVC codec for decoding.

The first controller 107 generally controls elements of the image reproducing apparatus 1, and may include a central processing unit (CPU) and a random access memory (RAM) for executing the firmware or operating system stored as the control program in the first storage section 117.

The first storage section 117 for storing data or information in the image reproducing apparatus 1 may be for example realized by a non-volatile memory, such as a flash memory, a hard disk, or the like.

The first storage section 117 may store the firmware, operating system and the other application programs as the control program needed for driving the image reproducing apparatus 1.

If the image reproducing apparatus 1 is a BD player installed with an open platform, a widget platform, etc., the first controller 107 receives the UHD image executive program from the content providing server 2 through the network 3, stores the UHD image executive program in the first storage section 117, and operates the UHD image executive program through an initialization process as necessary, in accordance with a user's input from the user input section 103.

Also, if the image reproducing apparatus 1 is a BD player previously storing the UHD image executive program in the first storage section 117, the first controller 107 operates the UHD image executive program through the initialization process as necessary in accordance with a user's input from the user input section 103.

At this time, the UHD image executive program is displayed on the display device 109 under control of the first controller 107.

Thus, when the UHD image executive program is operated, the first controller 107 automatically collects the image reproducing apparatus information from the operating system stored in the first storage section 117. The image reproducing apparatus information may include a manufacture's serial or production number for determining whether the image reproducing apparatus 1 has a function for generating the second image and whether it is an illegal apparatus, and/or information about whether the image reproducing apparatus 1 possesses an HEVC codec for reproducing an UHD image, i.e., reproducibility information of the second image.

Also, if the multimedia medium is loaded in the multimedia medium accommodating section 111 by the loader, the first controller 107 collects the multimedia medium information from the multimedia medium. The multimedia medium information may include a multimedia medium identification (ID), a title, and/or clip information.

Alternatively, the collection of information may be manually performed in accordance with a user's input through an execution menu of the UHD image executive program displayed on the display device 109.

Also, in accordance with a predetermined user input containing a user ID of the content providing server 2 through the UHD image executive program, the first controller 107 transmits the collected information to the content providing server 2 through the first communicator 101 while requesting a host authentication and the additional data for generating the second image. In accordance with the requests of the host authentication and the additional data, the content providing server 2 performs the host authentication and determines whether a service is supportable, i.e., whether the additional data may be provided by examining whether there is additional data corresponding to the request and whether the image reproducing apparatus 1 can generate the second image, based on the information received from the image reproducing apparatus 1. Here, the determination of whether the additional data may be provided may further include determining whether the image reproducing apparatus 1 is illegal or not based on the information received from the image reproducing apparatus 1. If the host authentication is passed and it is determined that the additional data may be provided, the content providing server 2 transmits the requested additional data to the image reproducing apparatus 1.

The signal containing the additional data transmitted from the content providing server 2 is received through the first communicator 101 and transmitted to the second demultiplexer 119, and the second demultiplexer 119 demultiplexes the signal containing the additional data and outputs the demultiplexed signal to the second decoder 121. The second decoder 121 decodes the additional data output from the second demultiplexer 119 in the form of HEVC codec.

The first controller 107 synthesizes the first video signal output from the first decoder 115 and the additional data output from the second decoder 121 to generate the second video signal, and outputs the generated second video signal and the audio signal to the display device 109. Accordingly, the second image (i.e., the UHD image) is displayed on the display device 109.

If the function of generating the second image is not selected in accordance with a user's input, the first controller 107 does not synthesize the first video signal and the additional data to generate the second video signal and outputs only the first video signal and the audio signal to the display device 109, so that the first image (i.e., the FHD image) can be displayed on the display device 109.

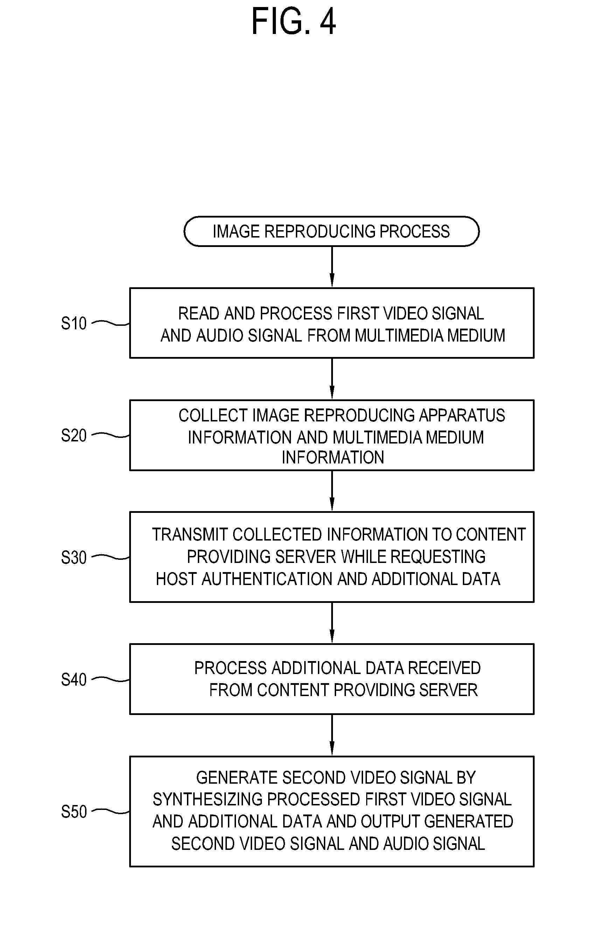

With this configuration according to an exemplary embodiment, an image reproducing process of the image reproducing apparatus 1 will be described in detail with reference to FIGs. 2 to 4.

First, if the UHD image executive program received from the content providing server 2 and stored in the first storage section 117 or previously stored in the first storage section 117 of the image reproducing apparatus 1 is executed, the first controller 107 reads the first video signal and the audio signal from the multimedia medium loaded to the multimedia medium accommodating section 111 and transmits the first video signal and the audio signal to the first demultiplexer 113. The first demultiplexer 113 demultiplexes the signal into the first video signal and the audio signal and outputs the demultiplexed signal to the first decoder 115. The first decoder 115 decodes the received first video signal and audio signal by the H. 264 method (operation S10). If the first video signal recorded in the multimedia medium is not scaled to have the same resolution as the second video signal, the first controller 107 may further upscale the first video signal decoded by the scaler 123 as shown in FIG. 3.

The first controller 107 collects the image reproducing apparatus information from the operating system stored in the first storage section 117, and the multimedia medium information from the multimedia medium loaded to the multimedia medium accommodating section 111, automatically or in accordance with a user's input through the UHD image executive program (operation S20).

Then, the first controller 107 requests the host authentication and the additional data for generating the second image to the content providing server 2, and transmits the collected information to the content providing server 2 through the first communicator 101, in accordance with a predetermined user input containing a user ID input (operation S30).

Next, under control of the first controller 107, the first communicator 101 receives the signal containing the additional data from the content providing server 2 when it is determined that the host authentication is passed and the additional data may be provided, and transmits the signal containing the additional data to the second demultiplexer 119. The second demultiplexer 119 demultiplexes the signal containing the additional data and outputs the demultiplexed signal to the second decoder 121, and the second decoder 121 decodes the additional data output from the second demultiplexer 119 in the form of the HEVC codec (operation S40).

Then, the first controller 107 receives the first video signal and audio signal decoded at the operation S10 from the first decoder 115 and the additional data decoded at the operation S40 from the second decoder 121, and synthesizes the received first video signal and additional data to generate the second video signal. Further, the first controller 107 outputs the generated second video signal and the audio signal to the display device 109, so that the second image can be displayed on the display device 109 (operation S50).

In the foregoing, the image reproducing apparatus 1 according to an exemplary embodiment is described as it is applied to an electronic device, such as the BD player, the home theater, and the like that has a display function by itself, but not limited thereto. For example, the image reproducing apparatus 1 may be realized by a display device such as a TV with a built-in BD player. In this case, the display device 109 illustrated in FIGs. 2 or 3 may be replaced by a display unit (not shown) such as a display panel of the TV, and the second decoder 121 may be replaced by a decoder (not shown) using the H.264 codec as well as the HEVC codec for the decoding.

Also, in the image reproducing apparatus 1 according to an exemplary embodiment, the first controller 107 converts the first image of the FHD image into the second image of the UHD image, but not limited thereto. Alternatively, the image reproducing apparatus 1 may convert a standard-definition (SD) image or a high-definition (HD) image into the UHD image.

FIG. 5 is a block diagram showing elements of the content providing server 2 according to an exemplary embodiment.

The content providing server 2 includes a second communicator 201, a second storage section 203, first and second signal processors 204 and 210, a calculator 208 and a second controller 207.

The second communicator 201 performs communication with the first communicator 101 of the image reproducing apparatus 1 through the network 3.

The second storage section 203 is to store data or information in the content providing server 2, which may be for example realized by a non-volatile memory, such as a flash memory, a hard disk, or the like.

The second storage section 203 stores various programs including the UHD image executive program to be provided to the image reproducing apparatus 1, additional data obtained by the calculator 208 to be described later, and various contents including first data for the first image (i.e., the FHD image) processed by a third signal processor 214.

Also, the second storage section 203 may store the first data containing the first video signal and the audio signal for the first image (i.e., the FHD image), and the second data containing the second video signal and the audio signal for the second image (i.e., the UHD image).

The first signal processor 204 processes the first video signal for the first image stored in the second storage section 203 so that the calculator 208 can raise the resolution of the first image (i.e., the FHD image) up to the resolution of the second image (i.e., the UHD image) in order to calculate the differential value. To this end, the first signal processor 204 may include a scaler for upscaling the first video signal.

The calculator 208 calculates the differential value between the second video signal for the second image stored in the second storage section 203 and the first video signal for the first image processed by the first signal processor 204. The calculator 208 may be realized in the form of an integrated chip (IC).

The second signal processor 210, which may include an encoder for encoding the differential value in the HEVC codec, processes and compresses the differential value calculated by the calculator 208.

The second controller 207, which may include a central processing unit (CPU) and a random access memory (RAM), controls overall operations of the content providing server 2.

The second controller 207 controls the second storage section 203 to store the differential value processed by the second signal processor 210 therein.

Also, the second controller 207 performs host authentication for the image reproducing apparatus 1 and determines whether the service is supportable, i.e., the additional data may be provided, based on the received image reproducing apparatus information and multimedia medium information . If it is determined that the host authentication is passed and the additional data may be provided, the second controller 207 controls the second communicator 201 to transmit the corresponding differential value (i.e., the additional data) requested by the image reproducing apparatus 1 to the image reproducing apparatus 1. The determination about the host authentication and whether the additional data may be provided is same as that described referring to FIG. 2, and thus repetitive descriptions thereof will be avoided.

According to an exemplary embodiment, the content providing server 2 further includes a third signal processor 214 for compressing the first video signal and the audio signal for the first image stored in the second storage section 203. The third signal processor 214 may include an encoder for encoding the first video signal and the audio signal.

The first video signal and the audio signal for the first image (i.e., the FHD image) encoded by the third signal processor 214 may be stored in the second storage section 203 as contents to be provided to the image reproducing apparatus 1, or may be output to another image reproducing apparatus (not shown) capable of recording the first video signal and the audio signal for the first image encoded to be recorded in the multimedia medium.

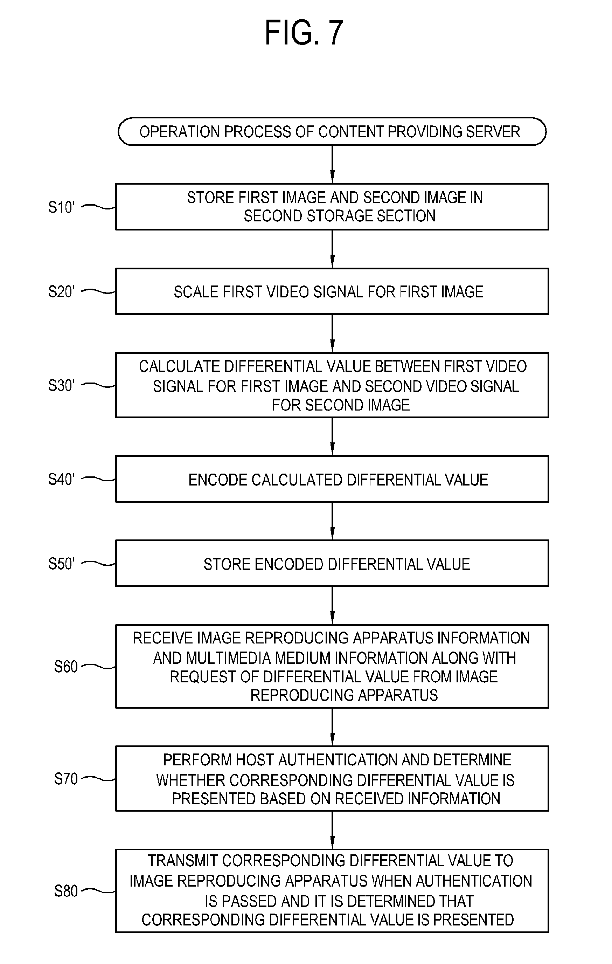

With this configuration according to an exemplary embodiment, operation processes of the content providing server 2 will be described in detail with reference to FIGs. 5 and 7.

First, the second controller 207 controls the first signal processor 204 and the calculator 208 to obtain a differential value between the first image and the second image, and controls the second signal processor 210 and the second storage section 203 to store the obtained differential value in the second storage section 203.

That is, the second controller 207 may control the second storage section 203 to store the first data containing the first video signal and audio signal for the first image and the second data containing the second video signal and audio signal for the second image, input through the second communicator 201 from an external source (not shown) connected to the network 3 (operation S10').

Then, the first signal processor 204 upscales the first video signal for the first image under control of the second controller 207 so that the resolution of the first image (i.e., the FHD image) can be raised up to the resolution of the second image (i.e., the UHD image) (S20').

Next, the calculator 208 calculates the differential value between the upscaled first video signal for the first image and the second video signal for the second image stored in the second storage section 203 (operation S30').

Next, the second signal processor 210 encodes the calculated differential value (operation S40'), and the second storage section 203 stores the encoded differential value (operation S50').

Then, the second controller 207 receives the request for the differential value along with the image reproducing apparatus information and the multimedia medium information from the image reproducing apparatus 1 (operation S60).

Next, the second controller 207 performs the host authentication and determines whether the corresponding differential value is stored in the second storage section 203, based on the received image reproducing apparatus information and multimedia medium information (operation S70).

If the host authentication is passed and it is determined that the corresponding differential value is stored, the second controller 207 transmits the corresponding differential value to the image reproducing apparatus 1 through the second communicator 201 (operation S80).

Meanwhile, to record the first image in the multimedia medium, the second controller 207 may control the third signal processor 214 to encode the first video signal and the audio signal for the first image stored in the second storage section 203 separately from the operation S20' after the operation S10'. At this time, the second controller 207 controls the first video signal and audio signal for the first image encoded by the third signal processor 214 to be synchronized with the differential value encoded by the second signal processor 210 at the operation S40'.

In the foregoing exemplary embodiment, the content providing server 2 generates the additional data (i.e., the differential value) to convert or restore the first image, (i.e., the FHD image) into the second image, (i.e., the UHD image), but not limited thereto. Alternatively, the content providing server 2 may be applied by the same configuration and principle when an SD image or HD image is converted into the UHD image.

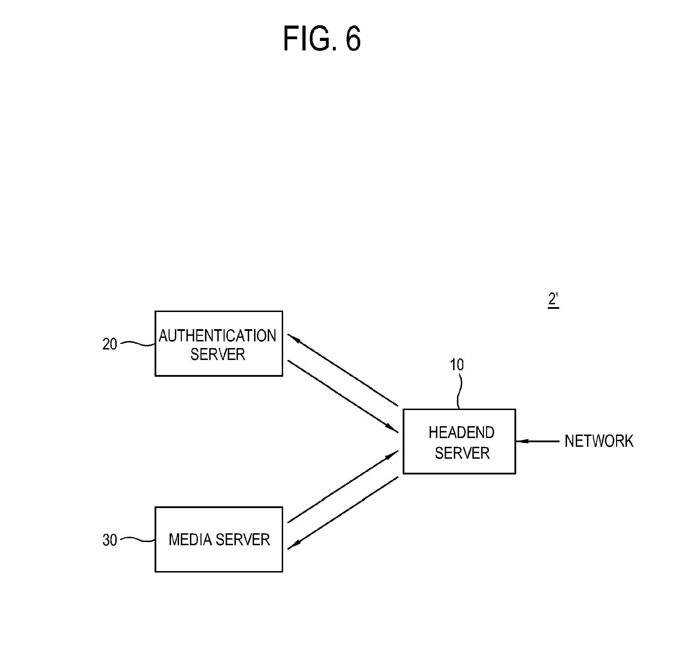

Also, the content providing server 2 according to the foregoing example embodiment is a single server that performs the generation of the additional data (i.e., the differential value), the host authentication, and the storage of the generated data in a lump, but not limited thereto. For example, as shown in FIG. 6, a content providing server 2' according to an exemplary embodiment may include a headend server 10 which performs functions corresponding to the functions for generating the additional data (i.e., the differential value) through the first and second signal processors 204 and 210, the calculator 208 and the second controller 207 and performs communication with the image reproducing apparatus 1; an authentication server 20 which performs a function corresponding to the second controller 207 performing the host authentication and determining whether the additional data (i.e., the differential value) may be provided; and a media server 30 which performs a function corresponding to the second storage section 203 storing contents including the UHD image executive program and additional data.

While not restricted thereto, an exemplary embodiment can be written as computer programs and can be implemented in general-use digital computers that execute the programs using a non-transitory computer readable medium which stores a program including the step of reading and processing a first video signal and an audio signal from a multimedia medium, the step of collecting image reproducing apparatus information and multimedia medium information, the step of requesting host authentication and additional data, the step of processing the received additional data, the step of generating a second video signal by synthesizing the processed first video signal and the additional data, and the step of outputting the generated second video signal and the audio signal.

Examples of the non-transitory computer readable recording medium include magnetic storage media (e.g., ROM, RAM, magnetic tape, floppy disks, hard disks, etc.) and optical recording media (e.g., CD-ROMs, or DVDs). Also, the exemplary embodiments may be written as computer programs transmitted over a computer-readable transmission medium, such as a carrier wave, and received and implemented in general-use digital computers that execute the programs.

As described above, the first controller 107 of the image reproducing apparatus 1 generates the second video signal for the second image (i.e., the UHD image) by synthesizing the first video signal for the first image (i.e., the FHD image) output from the first decoder 121 and the additional data (i.e., the differential value) provided from the content providing server 2, and outputs the generated second video signal and the audio signal to the display device 109. Accordingly, the second image (i.e., the UHD image) is displayed on the display device 109.

According to an exemplary embodiment, an image reproducing apparatus processes a full high-definition (FHD) image with additional data received from a content providing server for enhancing the quality of the corresponding image, and upgrade converts the corresponding image into an ultra high-definition (UHD) image, thereby reproducing a high quality image without any separate UHD disc or UHD image reproducing apparatus.

Although a few exemplary embodiments have been shown and described, it will be appreciated by those skilled in the art that changes may be made in these exemplary embodiments without departing from the principles of the invention. Therefore, the foregoing has to be considered as illustrative only. The scope of the exemplary embodiments is defined in the appended claims and their equivalents. Accordingly, all suitable modification may fall within the scope of the exemplary embodiments.

## Claims

1. An image reproducing apparatus comprising:
a communicator configured to communicate with a server;
a reproducer configured to read and process a first video signal and an audio signal from a multimedia medium in which the first video signal and the audio signal are recorded for a first image;
a signal processor configured to process additional data received from the server through the communicator to generate a second video signal for a second image based on the first video signal; and
a controller configured to collect information, request host authentication and the additional data, transmit the collected information to the server through the communicator, generate the second video signal by synthesizing the first video signal output from the reproducer and the additional data processed by the signal processor, and output the generated second video signal and the audio signal.

2. The image producing apparatus according to claim 1, wherein the information comprises image reproducing apparatus information and multimedia medium information.

3. The image producing apparatus according to claim 1, wherein the second image comprises an image having a higher resolution than that of the first image.

4. The image producing apparatus according to claim 1, wherein the additional data comprises a differential value between the first image and the second image.

5. The image producing apparatus according to claim 1, wherein the reproducer comprises:
a first demultiplexer configured to demultiplexe the first video signal and the audio signal; and
a first decoder configured to decode the first video signal and the audio signal output from the first demultiplexer.

6. The image producing apparatus according to claim 5, wherein the reproducer further comprises a scaler which upscales the decoded first video signal.

7. The image producing apparatus according to claim 1, wherein the signal processor comprises:
a second demultiplexer configured to demultiplex the additional data; and
a second decoder configured to decode the additional data output from the second demultiplexer.

8. The image producing apparatus according to claim 1, further comprising a user input section configured to receive a user's input,
wherein the controller requests the additional data of the server in accordance with the user's input.

9. The image producing apparatus according to claim 2, wherein the controller operates an executive program, which is received from the server or previously stored in the image producing apparatus, to collect the image reproducing apparatus information and the multimedia medium information, and to request the host authentication and the additional data.

10. The image producing apparatus according to claim 2, wherein the image reproducing apparatus information comprises at least one from among a manufacture's serial or production number and reproducibility of a second image.

11. The image producing apparatus according to claim 2, wherein the multimedia medium information comprises at least one from among a multimedia medium identification (ID), a title, and clip information.

12. An image reproducing method of an image reproducing apparatus according to any of claims 1 to 11, the method comprising:
reading and processing a first video signal and an audio signal from a multimedia medium in which the first video signal and the audio signal are recorded for a first image;
collecting information,
transmitting the collected information to a server and requesting host authentication and additional data to generate a second video signal for a second image based on the first video signal, of the server;
processing the additional data received from the server; and
generating the second video signal by synthesizing the processed first video signal and additional data, and outputting the generated second video signal and the audio signal.

13. A server comprising:
a communicator configured to communicate with an image reproducing apparatus according to any of claims 1 to 11;
a storage section configured to store a first video signal and an audio signal for a first image, and a second video signal and an audio signal for a second image;
a first signal processor configured to process the first video signal for the first image stored in the storage section;
a calculator configured to calculate a differential value between the second video signal for the second image stored in the storage section and the first video signal processed by the first signal processor;
a second signal processor configured to process the differential value calculated by the calculator; and
a controller configured to control the storage section to store the first video signal, the audio signal and the differential value processed by the first and second signal processors, perform, when a request of the differential value is received along with image reproducing apparatus information and multimedia medium information from the image reproducing apparatus, a host authentication, determine whether there is a corresponding differential value, and transmit the corresponding differential value to the image reproducing apparatus if the host authentication is passed and it is determined that there is the corresponding differential value.

14. A method of controlling a server, the method comprising:
calculating and storing a differential value between a first image and a second image;
receiving a request of the differential value along with image reproducing apparatus information and multimedia medium information from an image reproducing apparatus according to any of claims 1 to 11;
performing a host authentication and determining whether there is a corresponding differential value, based on the received information; and
transmitting the corresponding differential value to the image reproducing apparatus if the host authentication is passed and it is determined that there is the corresponding differential value.

15. A non-transitory computer readable recording medium in which a program for executing the image reproducing method of claim 12 is recorded.
